(19) Europäisches Patentamt European Patent Office Office européen des brevets

(11) **EP 4 350 975 A1**

(12) **EUROPEAN PATENT APPLICATION**
published in accordance with Art. 153(4) EPC

(43) Date of publication:
**10.04.2024 Bulletin 2024/15**

(21) Application number: **21942691.3**

(22) Date of filing: **25.10.2021**

(51) International Patent Classification (IPC):
*H02P 23/00* (2016.01)      *H02P 23/30* (2016.01)
*H02P 23/24* (2016.01)      *H02P 27/08* (2006.01)
*H02P 21/00* (2016.01)      *H02P 21/30* (2016.01)
*H02P 25/02* (2016.01)

(52) Cooperative Patent Classification (CPC):
Y02T 10/72

(86) International application number:
**PCT/CN2021/126092**

(87) International publication number:
**WO 2022/247127 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2021 CN 202110574687**

(71) Applicant: **CRRC Zhuzhou Electric Locomotive Research Institute Co., Ltd.**
**Zhuzhou, Hunan 412001 (CN)**

(72) Inventors:
• **ZENG, Xiaofan**
  **Zhuzhou, Hunan 412001 (CN)**

• **WEN, Yuliang**
  **Zhuzhou, Hunan 412001 (CN)**
• **MEI, Wenqing**
  **Zhuzhou, Hunan 412001 (CN)**
• **LI, Cheng**
  **Zhuzhou, Hunan 412001 (CN)**
• **HE, Yaping**
  **Zhuzhou, Hunan 412001 (CN)**
• **ZHENG, Hanfeng**
  **Zhuzhou, Hunan 412001 (CN)**
• **LIAN, Guoyi**
  **Zhuzhou, Hunan 412001 (CN)**
• **YANG, Fan**
  **Zhuzhou, Hunan 412001 (CN)**
• **NAN, Yonghui**
  **Zhuzhou, Hunan 412001 (CN)**

(74) Representative: **Laine IP Oy**
**Porkkalankatu 24**
**00180 Helsinki (FI)**

(54) **DIRECT TORQUE FIELD WEAKENING CONTROL METHOD AND APPARATUS, STORAGE MEDIUM AND ELECTRONIC DEVICE**

(57)     A direct torque field weakening control method and apparatus, a storage medium and an electronic device, the method comprising: determining the running state of a motor currently used, the running state comprising forward rotation and reverse rotation; if the running state of the motor is forward rotation, determining whether the motor is necessary to subject to field weakening control; if the motor is necessary to subject to field weakening control, reducing stator flux linkage amplitude, and performing field weakening control; if the running state of the motor is reverse rotation, determining whether the motor is necessary to subject to field weakening control; and if the motor is necessary to subject to field weakening control, reducing stator flux linkage amplitude, and performing field weakening control.

Fig. 1

## Description

### Cross-reference to Related Applications

This application claims the priority of Chinese Patent Application CN 202110574687.X, entitled "Direct Torque Field Weakening Control Method and Apparatus, Storage Medium and Electronic Device" and filed on May 26, 2021, the entirety of which is incorporated herein by reference.

### Field of the Invention

The present disclosure relates to the technical field of motor control, and in particular, to a direct torque field weakening control method, a direct torque field weakening control apparatus, a storage medium, and an electronic device.

### Background of the Invention

In order to enable an AC motor to have an excellent speed adjustment performance, closed-loop control is generally adopted. A strategy of the closed-loop control of the AC motor mainly includes vector control and direct torque control. The vector control realizes decoupling control on a current on the quadrature axis and a current on the direct axis based on an idea of rotor flux orientation and coordinate transformation. However, for the closed-loop control without speed or position feedback, the accuracy of the rotor flux orientation is greatly influenced by motor parameters, and the actual control cannot achieve the effect of theoretical analysis.

The direct torque control adopts the stator flux linkage orientation, which greatly reduces the influence of the motor parameters on the control performance and has rapid torque response, and thus it is an AC motor speed adjustment method with high dynamic and static performance.

A commonly used strategy of direct torque field weakening control at present is as follows: when it is detected that active vectors are continuously output with no zero vector being output in terms of an output voltage, switching to a torque or power loop PI regulator is performed to regulate a working status of square wave field weakening control in which a stator flux linkage is given, and when an output of the field weakening PI regulator is 0, switching to a normal control mode is performed. However, such switching is relatively complicated, so that it hardly achieves a better effect in a dynamic process and meanwhile it is impossible to perform field weakening control in a non-square wave field weakening area.

### Summary of the Invention

With respect to the above problems, the present disclosure provides a direct torque field weakening control method, a direct torque field weakening control apparatus, a storage medium, and an electronic device, which solve the technical problem that the field weakening control cannot be performed in a non-square wave field weakening area in relevant technologies.

In a first aspect, an embodiment of the present disclosure provides a direct torque field weakening control method. The method includes: determining a running state of a motor currently used, the running state including forward rotation and reverse rotation; determining whether the motor is necessary to subject to field weakening control if the running state of the motor is the forward rotation; reducing an amplitude of the stator flux linkage and performing the field weakening control if the motor is in the forward rotation and is necessary to subject to the field weakening control; determining whether the motor is necessary to subject to field weakening control if the running state of the motor is the reverse rotation; and reducing an amplitude of the stator flux linkage and performing the field weakening control if the motor is in the reverse rotation and is necessary to subject to the field weakening control.

In a second aspect, an embodiment of the present disclosure provides direct torque field weakening control apparatus, including: a first determination unit, which is configured to determine a running state of a motor currently used, the running state including forward rotation and reverse rotation; a second determination unit, which is configured to determine whether the motor is necessary to subject to field weakening control if the running state of the motor is the forward rotation and determine whether the motor is necessary to subject to field weakening control if the running state of the motor is the reverse rotation; and a control unit, which is configured to reduce an amplitude of the stator flux linkage and perform the field weakening control if the motor is necessary to subject to the field weakening control and reduce an amplitude of the stator flux linkage and perform the field weakening control if the motor is necessary to subject to the field weakening control.

In a third aspect, an embodiment of the present disclosure provides a storage medium on which a computer program is stored, the computer program being executable by one or more processors so as to implement the direct torque field weakening control method according to the first aspect.

In a fourth aspect, an embodiment of the present disclosure provides an electronic device, including a memory on which a computer program is stored, and a processor, wherein the memory and the processor are communicatively connected with each other, and the computer program, when executed by the processor, implements the direct torque field weakening control method according to the first aspect.

### Brief Description of the Drawings

In order to describe technical solutions in embodiments of the present disclosure or in existing technologies more clearly, accompanying drawings to be used in the description of the embodiments or the existing technologies will be introduced briefly below. Apparently, the drawings in the following description are used only for the embodiments of the present disclosure. For a person of ordinary skills in the art, other drawings may also be obtained according to drawings provided without making creative efforts.

Fig. 1 is a schematic diagram of a flowchart of a direct torque field weakening control method provided by an embodiment of the present disclosure;
Fig. 2 is a schematic diagram of a principle for direct torque field weakening control provided by an embodiment of the present disclosure;
Fig. 3 is a schematic diagram of voltage vectors and stator flux linkage loci provided by an embodiment of the present disclosure;
Fig. 4 is a schematic diagram of loci of flux linkage at different stator flux linkage amplitudes provided by an embodiment of the present disclosure;
Fig. 5a is a schematic diagram of a square wave and a torque waveform in a state approximating the square wave provided by an embodiment of the present disclosure;
Fig. 5b is a schematic diagram of a square wave when $\Delta T_e$ is 0 and a torque waveform in a state approximating the square wave provided by an embodiment of the present disclosure;
Fig. 6 is a schematic diagram of a structure of a direct torque field weakening control apparatus provided by an embodiment of the present disclosure; and
Fig. 7 is a block diagram of connections of an electronic device provided by an embodiment of the present disclosure.

## Detailed Description of the Embodiments

Implementations of the present disclosure will be explained in detail with reference to accompanying drawings in conjunction with embodiments, whereby it can be fully understood how to solve the technical problem by the technical means according to the present disclosure and achieve the corresponding technical effects thereof, and the implementations can be carried out according to the understanding. As long as there is no conflict, the embodiments in the present disclosure and respective features in the embodiments may be combined with one another, and technical solutions obtained thereby all fall within the scope of the present disclosure.

It can be seen from the background of the invention that, a commonly used strategy of direct torque field weakening control at present is as follows: when it is detected that active vectors are continuously output with no zero vector being output in terms of an output voltage, switching to a torque or power loop PI regulator is performed to regulate a working status of square wave field weakening control in which a stator flux linkage is given, and when an output of the field weakening PI regulator is 0, switching to a normal control mode is performed. However, such switching is relatively complicated, so that it hardly achieves a better effect in a dynamic process and meanwhile it is impossible to perform field weakening control in a non-square wave field weakening area.

In view of these, the present disclosure provides a direct torque field weakening control method, a direct torque field weakening control apparatus, a storage medium, and an electronic device, which solve the problem that the field weakening control cannot be performed in the non-square wave field weakening area in relevant technologies.

## Embodiment One

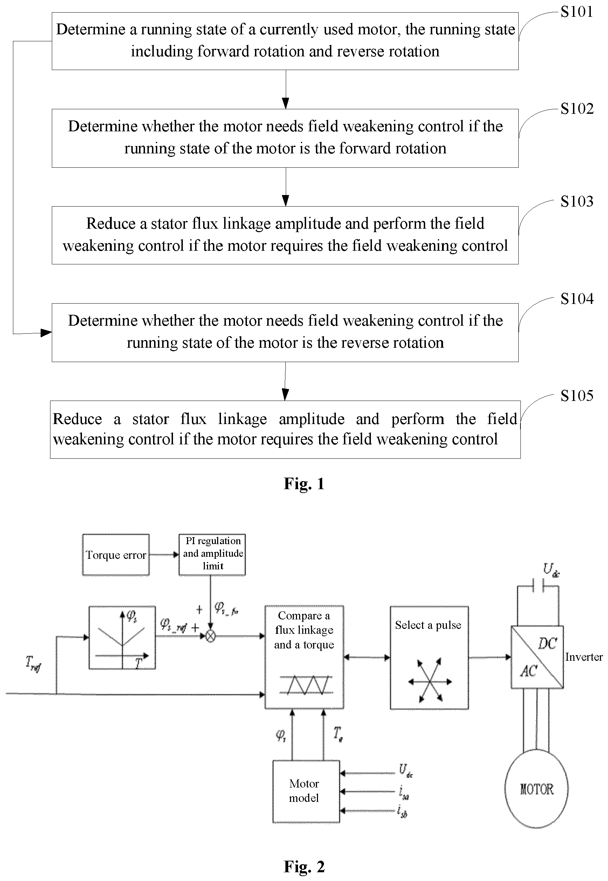

Fig. 1 is a schematic diagram of a flowchart of a direct torque field weakening control method provided by the present embodiment. As shown in Fig. 1, the method includes steps S101 to S105.

At step S101, a running state of a motor currently used is determined, the running state including forward rotation and reverse rotation.

It should be noted that, before determining the running state of the motor currently used, it is required to set an upper limit of an output of a field weakening PI regulator to be 0.

At step S 102, if the running state of the motor is the forward rotation, whether the motor is necessary to subject to field weakening control is determined.

In some embodiments, determining whether the motor is necessary to subject to the field weakening control if the running state of the motor is the forward rotation may adopt the following implementation manner.

It is determined whether a maximum feedback torque of a section currently used in a stator flux linkage is less than an upper boundary of hysteresis loop of a given torque.

If it is determined that the maximum feedback torque of the section currently used in the stator flux linkage is greater than or equal to the upper boundary of hysteresis loop of the given torque, then the motor is not necessary to subject to the field weakening control.

If it is determined that the maximum feedback torque of the section currently used in the stator flux linkage is less than the upper boundary of hysteresis loop of the given torque, then the motor needs to subject to the field weakening control.

It should be noted that, a main principle of direct torque control is shown in Fig. 2. A stator flux linkage and a torque are obtained by observing a voltage and a current of a stator. By comparing the torque obtained by observation with a given torque, a torque of the motor is controlled to be within a certain tolerance range. By comparing the stator flux linkage obtained by observation with a given flux linkage, a locus of the stator flux linkage is controlled to be a circle or a polygon. For simplification, a hexagonal locus of the flux linkage is taken as an example.

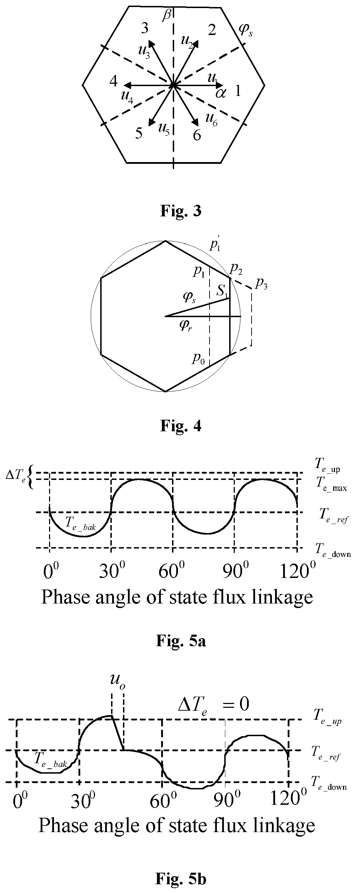

Voltage vectors of an inverter include six active vectors and two zero vectors. The zero vectors are not illustrated, and a hexagonal stator flux linkage is shown in Fig. 3. The stator flux linkage is divided into 6 sections.

According to a motor model in a static coordinate system of the motor, a relationship between a stator flux linkage $\overrightarrow{\varphi_s}$ and a stator voltage vector $\overrightarrow{U_s}$ is:

$$\overrightarrow{\varphi_s} = \int \overrightarrow{U_s} - R_s \overrightarrow{i_s} dt$$

in which $\overrightarrow{i_s}$ is a stator current vector.

The above formula indicates that the stator flux linkage $\overrightarrow{\varphi_s}$ is under the control of a stator voltage $\overrightarrow{U_s}$ so that an amplitude and an angle of $\overrightarrow{\varphi_s}$ can be adjusted. By selecting a proper stator voltage vector, the locus of the stator flux linkage can be controlled to be a circle or a polygon, and meanwhile the stator flux linkage remains unchanged when the zero vectors act.

The electromagnetism of a permanent magnet synchronous motor is taken as an example, and a torque equation thereof is:

$$T_e = p_n \left[ \frac{\varphi_f |\varphi_s|}{L_d} \sin \delta_s + \frac{L_d - L_q}{2 L_d L_q} |\varphi_s|^2 \sin 2\delta_s \right]$$

in which, $p_n$ is the number of pole pairs, $L_d$ is direct-axis inductance of the stator, $L_q$ is quadrature-axis inductance of the stator, $\delta_s$ is an angle between a stator flux linkage vector $\overrightarrow{\varphi_s}$ and a rotor flux linkage vector $\overrightarrow{\varphi_f}$, which is generally referred to as a load angle. It is indicated that $T_e$ may be changed by changing $\delta_s$.

The forward rotation is taken as an example. In a transient state, if a rotation speed of the stator flux linkage vector $\overrightarrow{\varphi_s}$ is set to exceed a speed of the rotor, then the load angle $\delta_s$ becomes greater, and an electromagnetic torque is increased accordingly. On the contrary, if the amplitude of the stator flux linkage $\overrightarrow{\varphi_s}$ is kept unchanged and the rotation speed thereof is set to be lower than the speed of the rotor, then the load angle $\delta_s$ is decreased, and the electromagnetic torque is decreased accordingly.

Therefore, when the active vectors act, the torque is increased, and when the zero vectors act, the torque is decreased. When a feedback torque is greater than a given upper boundary, the zero vectors are output to decrease the torque, and when the feedback torque is less than the given lower boundary, the active vectors are output to increase the torque. In this way, the torque of the motor can be controlled to be within a certain tolerance range.

With increasing of the rotation speed, when a certain rotation speed is reached, even if the active voltage vectors keep working, the rotation speed of the stator flux linkage vector $\overrightarrow{\varphi_s}$ is still lower than the speed of the rotor and the torque is unable to keep pace with the given torque. It is the time to perform the field weakening control. In addition, in order to locate a field weakening voltage point in the non-square wave field weakening area sometimes, it is also required to perform the field weakening control.

At step S103, if the motor is necessary to subject to the field weakening control, the amplitude of the stator flux linkage is reduced, and the field weakening control is performed.

In some embodiments, reducing the amplitude of the stator flux linkage and performing the field weakening control if the motor is necessary to subject to the field weakening control may adopt the following implementation manner.

A difference between an upper boundary of hysteresis loop of the given torque of the section currently used in the stator flux linkage and a preset difference value is calculated.

A reduction value is obtained by subtracting the difference from the maximum feedback torque of the section currently used in the stator flux linkage.

A flux linkage reduction amplitude is obtained by performing PI regulation on the reduction value, and the amplitude of the stator flux linkage is reduced according to the flux linkage reduction amplitude.

In some embodiments, reducing the amplitude of the stator flux linkage according to the flux linkage reduction amplitude may adopt the following implementation manner.

A target amplitude after reducing the amplitude of the stator flux linkage is obtained by adding the flux linkage reduction amplitude to a given flux linkage of the section currently used in the stator flux linkage.

The amplitude of the stator flux linkage is adjusted to the target amplitude by a torque deviation.

It should be noted that, it is known from the torque equitation that the torque of the permanent magnet motor is in a positive correlation with the load angle $\theta$, and it is necessary to adjust the load angle $\theta$ in time in the dynamic process to meet the requirement of torque control. With respect to the influence of change of the amplitude of the stator flux linkage on the torque, analysis is made by taking an example of a hexagonal locus of the flux linkage being in the forward rotation within a weakening field. Reference can be made to Fig. 4.

When a given value of the flux linkage is reduced, a time for the stator flux linkage to directly move from a point $p_0$ to a point $p_1$ is shorter than a time required for moving along an original trajectory shown in a solid line, and a trajectory by which the rotator flux linkage moves to $p_1$ with an original average locus speed along a circular locus is relatively long. As a result, the angle $\theta$

is increased, and the torque is increased accordingly. On the contrary, if the torque is to be decreased, then the given value of the flux linkage must be increased. At this time, the stator flux linkage passes by $p_3$ and reaches a point $p_2$, in which a route of the trajectory is elongated and a time required is relatively long. As a result, the angle $\theta$ is reduced, and the torque is decreased accordingly.

Thus, in a square wave, if there is a demand of increasing the torque, it can only be realized by reducing the amplitude of the stator flux linkage, and if there is a demand of decreasing the torque, it can be realized by increasing the stator flux linkage. If it is necessary to decrease the torque very quickly in the dynamic process, the zero vectors may be used.

There is a need to ensure that a control system is able to perform smooth switching between a square wave area and a non-square wave area without changing its structure and that the field weakening control can be performed at any output voltage point. As shown in Fig. 5b, when it is determined that the motor is in the forward rotation, since the zero vectors are triggered when the feedback torque is greater than the upper boundary of the given torque so as to decrease the torque, a maximum output voltage is not reached at this time. In order to reach a working state of the maximum output voltage, the feedback torque is not allowed to reach the upper boundary of the given torque in a stable state, the stable state referring to that the working state is unchanged. In consideration of symmetry and that each section of the stator flux linkage can only be adjusted once in the square wave, a comparison is performed on values of respective sampling points in the section to obtain a maximum value point $T_{e\_max}$ in each section. Then, a value $T_{e\_up}-\Delta T_e$ is obtained by subtracting a relatively small preset difference value (i.e., $\Delta T_e$ in Fig. 5b) from the upper boundary of the hysteresis loop $T_{e\_up}$, and a value obtained by subtracting $T_{e\_up}-\Delta T_e$ from the value $T_{e\_max}$ is used as an error value input of field weakening PI regulation. An PI output value resulted is added to the given value of the stator flux linkage, and an upper limit value of an output of the PI regulator is limited to be 0. In this way, a maximum value $T_{e\_max}$ of the feedback torque in each section is controlled to be at a given value $T_{e\_up}-\Delta T_e$. If $\Delta T_e$ is 0, then it is in a critical state between square wave field weakening and non-field weakening, as shown in Fig. 5b. If $\Delta T_e$ is greater than 0, then a working state of field weakening by full square wave is obtained in the stable state, which is shown in Fig. 5a.

It should be further noted that, when the field weakening control is not required, the maximum feedback torque in each section is greater than a given value of the regulator in the stable state, and the output of the PI regulator is fully loaded with the output being 0. When the field weakening control is required, it is indicated that the maximum feedback torque in each section is less than the given value of the regulator in the stable state, and the regulator outputs a negative value to perform the field weakening control. In this way, the field weakening control can be performed in the non-square area at the same time.

At step S 104, if the running state of the motor is the reverse rotation, whether the motor is necessary to subject to field weakening control is determined.

In some embodiments, determining whether the motor is necessary to subject to the field weakening control if the running state of the motor is the reverse rotation may adopt the following implementation manner.

It is determined whether a minimum feedback torque of a section currently used in the stator flux linkage is less than a lower boundary of hysteresis loop of the given torque .

If it is determined that the maximum feedback torque of the section currently used in the stator flux linkage is less than or equal to the lower boundary of hysteresis loop of the given torque, the motor is not necessary to subject to the field weakening control.

If it is determined that the minimum feedback torque of the section currently used in the stator flux linkage is greater than the lower boundary of hysteresis loop of the given torque, the motor is necessary to subject to the field weakening control.

It should be noted that, in contrast to the case when the motor is in the forward rotation, when the motor is in the reverse rotation, in a transient state, if the rotation speed of the stator flux linkage vector $\overrightarrow{\varphi_s}$ is set to exceed the speed of the rotor, then the load angle $\delta_s$ becomes smaller, and the electromagnetic torque is decreased accordingly. On the contrary, if the amplitude of the stator flux linkage $\overrightarrow{\varphi_s}$ is kept unchanged and the rotation speed thereof is set to be lower than the speed of the rotor, then the load angle $\delta_s$ is increased, and the electromagnetic torque is increased accordingly.

Therefore, when the active vectors act, the torque is decreased, and when the zero vectors act, the torque is increased. When the feedback torque is greater than a given upper boundary, the zero vectors are output to increase the torque, and when the feedback torque is less than a given lower boundary, the active vectors are output to decrease the torque. In this way, the torque of the motor can be controlled to be within a certain tolerance range.

With increasing of the rotation speed, when a certain rotation speed is reached, even if the active voltage vectors keep working, the rotation speed of the stator flux linkage vector $\overrightarrow{\varphi_s}$ is still lower than the speed of the rotor and the torque is unable to keep pace with the given torque. It is the time to perform the field weakening control. In addition, in order to locate a field weakening voltage point in the non-square wave field weakening area sometimes, it is also required to perform the field weakening control.

At step S105, if the motor is necessary to subject to the field weakening control, the amplitude of the stator flux linkage is reduced, and the field weakening control is performed.

In some embodiments, reducing the amplitude of the stator flux linkage and performing the field weakening control if the motor is necessary to subject to the field weakening control may adopt the following implementation manner.

A difference between a lower boundary of hysteresis loop of the given torque of the section currently used in the stator flux linkage and a preset difference value is calculated.

A reduction value is obtained by subtracting the difference from the minimum feedback torque of the section currently used in the stator flux linkage.

A flux linkage reduction amplitude is obtained by performing PI regulation on the reduction value, and the amplitude of the stator flux linkage is reduced according to the flux linkage reduction amplitude.

In some embodiments, reducing the amplitude of the stator flux linkage according to the flux linkage reduction amplitude may adopt the following implementation manner.

A target amplitude after reducing the amplitude of the stator flux linkage is obtained by adding the flux linkage reduction amplitude to a given flux linkage of the section currently used in the stator flux linkage.

The amplitude of the stator flux linkage is adjusted to the target amplitude by a torque deviation.

It should be noted that, with respect to the field weakening control when the motor is in the reverse rotation, since the zero vectors act to increase the torque and the active vectors act to decrease the torque at this time, a value obtained after $\Delta T_e$ is added to the lower boundary of each section and a minimum value of the feedback torque of each section are subjected to field weakening PI regulation and then are added to the given stator flux linkage. An upper limit of the output of the field weakening PI regulator is also limited to be 0.

To sum up, by using the direct torque field weakening control method provided by the present embodiment, a running state of a motor currently used is determined, the running state including forward rotation and reverse rotation. If the running state of the motor is the forward rotation, whether the motor is necessary to subject to field weakening control is determined. If the motor is necessary to subject to the field weakening control, then an amplitude of the stator flux linkage is reduced, and the field weakening control is performed. If the running state of the motor is the reverse rotation, whether the motor is necessary to subject to field weakening control is determined. If the motor is necessary to subject to the field weakening control, then the amplitude of the stator flux linkage is reduced, and the field weakening control is performed. The present disclosure performs the field weakening control by adjusting the amplitude of the stator flux linkage, realizes both of direct torque square wave field weakening control and non-square wave area dynamic field weakening control without changing a control structure, and further realizes smooth switching between a square wave area and a non-square wave area, thereby having an excellent dynamic and static field weakening control performance.

## Embodiment Two

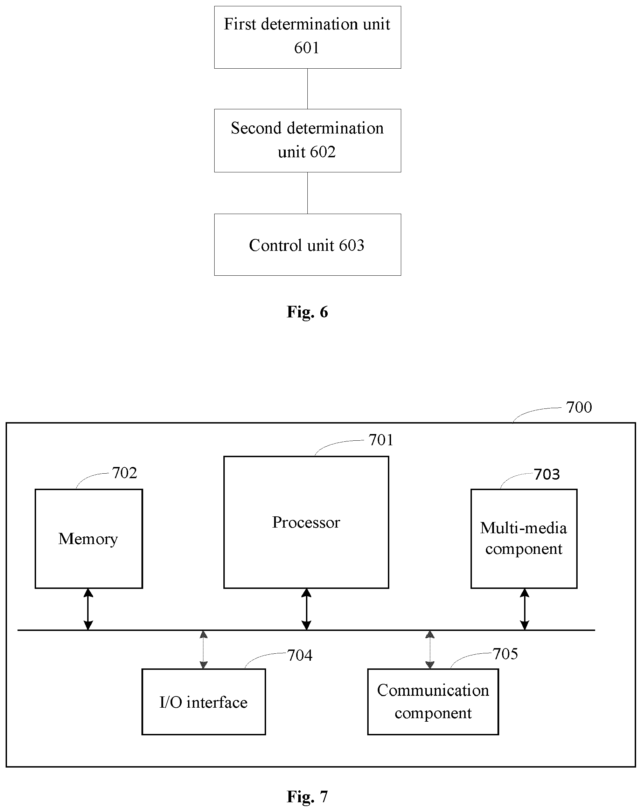

Based on the direct torque field weakening control method provided by the above embodiment, Fig. 6 shows a direct torque field weakening control apparatus for applying the direct torque field weakening control method.

As shown in Fig. 6, the present embodiment provides a direct torque field weakening control apparatus, and the apparatus includes a first determination unit 601, a second determination unit 602, and a control unit 603.

The first determination unit 601 is configured to determine a running state of a motor currently used, the running state including forward rotation and reverse rotation.

The second determination unit 602 is configured to determine whether the motor is necessary to subject to field weakening control if the running state of the motor is the forward rotation, and determine whether the motor is necessary to subject to field weakening control if the running state of the motor is the reverse rotation.

The control unit 603 is configured to reduce an amplitude of the stator flux linkage and perform the field weakening control if the motor is necessary to subject to the field weakening control, and reduce an amplitude of the stator flux linkage and perform the field weakening control if the motor is necessary to subject to the field weakening control.

With respect to specific working processes of the first determination unit 601, the second determination unit 602, and the control unit 603 in the direct torque field weakening control apparatus provided in the present embodiment, reference can be made to corresponding contents in the direct torque field weakening control method provided in the above Embodiment One, and details are not described any further herein.

To sum up, by using the direct torque field weakening control apparatus provided by the present embodiment, a running state of a motor currently used is determined, the running state including forward rotation and reverse rotation. If the running state of the motor is the forward rotation, whether the motor is necessary to subject to field weakening control is determined. If the motor is necessary to subject to the field weakening control, an amplitude of the stator flux linkage is reduced, and the field weakening control is performed. If the running state of the motor is the reverse rotation, whether the motor is necessary to subject to field weakening control is determined. If the motor is necessary to subject to the field weakening control, an amplitude of the stator flux linkage is reduced, and the field weakening control is performed. The present disclosure performs the field weakening control by adjusting the amplitude of the stator flux linkage, realizes both of direct torque square wave field weakening control and non-square wave area dynamic field weakening control without changing a control structure, and further realizes smooth switching between a square wave area and a non-square wave area, thereby having an excellent dynamic and static field weakening control performance.

## Embodiment Three

The present embodiment further provides a computer readable storage medium, such as a flash memory, a hard disk, a multimedia card, a card-type memory (for example, an SD memory, a DX memory, and the like), a random access memory (RAM), static random access memory (SRAM), a read only memory (ROM), an electrically erasable programmable read-only memory (EEPROM), a programmable read-only memory (PROM), a magnetic memory, a magnetic disk, an optical disk, a server, an application store, and the like, on which a computer program is stored. The computer program, when executed by the processor, may implement steps of the method in the above embodiment, which are not described any further herein by the present embodiment.

## Embodiment Four

Fig. 7 is a block diagram of connections of an electronic device 700 provided by the present embodiment. As shown in Fig. 7, the electronic device 700 may include a processor 701, a memory 702, a multi-media component 703, an input/output (I/O) interface 704, and a communication component 705.

The processor 701 is configured to implement all or some of steps of the direct torque field weakening control method. The memory 702 is configured to store various types of data which may include any instruction of an application or a method in the electronic device as well as application related data.

The processor 701 may be implemented by an application specific integrated circuit (ASIC for short), a digital signal processor (DSP for short), a digital signal processing device (DSPD for short), a programmable logic device (PLD for short), a field programmable gate array (FPGA for short), a controller, a microcontroller, a microprocessor, or other electronic component, and is configured to implement the direct torque field weakening control method in the above embodiment.

The memory 702 may be implemented by any type of volatile or non-volatile storage device or combinations thereof, such as a static random access memory (SRAM for short), an electrically erasable programmable read-only memory (EEPROM), an erasable programmable read-only memory (EPROM for short), a programmable read-only memory (PROM), a read-only memory (ROM for short), a magnetic memory, a flash memory, a magnetic disk, or an optical disk.

The multi-media component 703 may include a screen and an audio component. The screen may be a touch screen, and the audio component is configured to output and/or input audio signals. For example, the audio component may include a microphone, and the microphone is configured to receive external audio signals. The audio signals received may be further stored in the memory or transmitted by a communication component. The audio component may further include at least one loudspeaker, which is configured to output the audio signals.

The I/O interface 704 provides an interface between the processor 701 and other interface modules, and the mentioned other interface modules may be a keyboard, a mouse, buttons, and the like. These buttons may be virtual buttons or physical buttons.

The communication component 705 is configured to perform wired or wireless communications between the electronic device 700 and another devices. The wireless communication may be, for example, Wi-Fi, Bluetooth, near field communication (NFC for short), 2G, 3G, or 4G, or a combination of one or some of them. Therefore, correspondingly, the communication component 705 may include a Wi-Fi module, a Bluetooth module, or an NFC module.

To sum up, by using the direct torque field weakening control method, the direct torque field weakening control apparatus, the storage medium, and the electronic device provided by the present disclosure, a running state of a motor currently used is determined, the running state including forward rotation and reverse rotation. If the running state of the motor is the forward rotation, whether the motor is necessary to subject to field weakening control is determined. If the motor is necessary to subject to the field weakening control, then an amplitude of the stator flux linkage is reduced and the field weakening control is performed. If the running state of the motor is the reverse rotation, whether the motor is necessary to subject to field weakening control is determined. If the motor is necessary to subject to the field weakening control, then an amplitude of the stator flux linkage is reduced and the field weakening control is performed. The present disclosure performs the field weakening control by adjusting the amplitude of the stator flux linkage, realizes both of direct torque square wave field weakening control and non-square wave area dynamic field weakening control without changing a control structure, and further realizes smooth switching between a square wave area and a non-square wave area, thereby having an excellent dynamic and static field weakening control performance.

In the several embodiments provided in the present disclosure, it should be understood that the method disclosed may also be implemented through other manners. The above described method embodiments are only exemplary.

It should be noted that, the term "include", "comprise", or any other variation thereof herein is intended to cover a non-exclusive inclusion, such that a process, method, article, or apparatus that comprises a list of elements does not include only those elements but may include other elements not expressly listed or inherent to such process, method, article, or apparatus. For an element that is preceded by "comprises a ...", it does not means to, without more constraints, preclude the existence of additional identical elements in the process, method, article, or apparatus that comprises the element.

Although the embodiments of the present disclosure are disclosed as above, the above embodiments are described only for better understanding, rather than restricting, the present disclosure. Any person skilled in the art of the present disclosure can make any amendment or change to the implementing forms or details without departing from the spirit and scope of the present disclosure, but the patent protection scope of the present disclosure shall be determined by the scope as defined in the claims.

**Claims**

1. A direct torque field weakening control method, comprising:

    determining a running state of a motor currently used, the running state comprising forward rotation and reverse rotation;
    determining whether the motor is necessary to subject to field weakening control if the running state of the motor is the forward rotation;
    reducing an amplitude of stator flux linkage and performing the field weakening control if the motor is in the forward rotation and is necessary to subject to the field weakening control;
    determining whether the motor is necessary to subject to field weakening control if the running state of the motor is the reverse rotation;
    reducing an amplitude of stator flux linkage and performing the field weakening control if the motor is in the reverse rotation and is necessary to subject to the field weakening control.

2. The method according to claim 1, **characterized in that** determining whether the motor is necessary to subject to field weakening control if the running state of the motor is the forward rotation comprises:

    determining whether a maximum feedback torque of a section currently used in the stator flux linkage is less than an upper boundary of hysteresis loop of a given torque;
    determining that the motor is not necessary to subject to the field weakening control if it is determined that the maximum feedback torque of the section currently used in the stator flux linkage is greater than or equal to the upper boundary of hysteresis loop of the given torque; and
    determining that the motor is necessary to subject to the field weakening control if it is determined that the maximum feedback torque of the section currently used in the stator flux linkage is less than the upper boundary of hysteresis loop of the given torque.

3. The method according to claim 1, **characterized in that** determining whether the motor is necessary to subject to field weakening control if the running state of the motor is the reverse rotation comprises:

    determining whether a minimum feedback torque of a section currently used in the stator flux linkage is less than a lower boundary of hysteresis loop of a given torque.
    determining that the motor is not necessary to subject to the field weakening control if it is determined that the minimum feedback torque of the section currently used in the stator flux linkage is less than or equal to the lower boundary of hysteresis loop of the given torque;
    determining that the motor is necessary to subject to the field weakening control if it is determined that the minimum feedback torque of the section currently used in the stator flux linkage is greater than the lower boundary of hysteresis loop of the given torque.

4. The method according to claim 1, **characterized in that** reducing an amplitude of stator flux linkage and performing the field weakening control if the motor is in the forward rotation and is necessary to subject to the field weakening control comprise:

    calculating a difference between an upper boundary of hysteresis loop of a given torque of a section currently used in the stator flux linkage and a preset difference value;
    obtaining a reduction value by subtracting the difference from a maximum feedback torque of the section currently used in the stator flux linkage; and
    obtaining a flux linkage reduction amplitude by performing PI regulation on the reduction value, and reducing the amplitude of the stator flux linkage according to the flux linkage reduction amplitude.

5. The method according to claim 1, **characterized in that** reducing an amplitude of stator flux linkage and performing the field weakening control if the motor is in the reverse rotation and is necessary to subject to the field weakening control comprise:

    calculating a difference between a lower boundary of hysteresis loop of a given torque of a section currently used in the stator flux linkage and a preset difference value;

obtaining a reduction value by subtracting the difference from a minimum feedback torque of the section currently used in the stator flux linkage; and

obtaining a flux linkage reduction amplitude by performing PI regulation on the reduction value, and reducing the amplitude of the stator flux linkage according to the flux linkage reduction amplitude.

6. The method according to claim 4, **characterized in that** reducing the amplitude of the stator flux linkage according to the flux linkage reduction amplitude comprises:

obtaining a target amplitude after reducing the amplitude of the stator flux linkage by adding the flux linkage reduction amplitude to a given flux linkage of the section currently used in the stator flux linkage; and

adjusting the amplitude of the stator flux linkage to the target amplitude by a torque deviation.

7. The method according to claim 5, **characterized in that** reducing the amplitude of the stator flux linkage according to the flux linkage reduction amplitude comprises:

obtaining a target amplitude after reducing the amplitude of the stator flux linkage by adding the flux linkage reduction amplitude to a given flux linkage of the section currently used in the stator flux linkage; and

adjusting the amplitude of the stator flux linkage to the target amplitude by a torque deviation.

8. A direct torque field weakening control apparatus, comprising:

a first determination unit, which is configured to determine a running state of a motor currently used, the running state comprising forward rotation and reverse rotation;

a second determination unit, which is configured to determine whether the motor is necessary to subject to field weakening control if the running state of the motor is the forward rotation, and determine whether the motor is necessary to subject to field weakening control if the running state of the motor is the reverse rotation; and

a control unit, which is configured to reduce an amplitude of the stator flux linkage and perform the field weakening control if the motor is necessary to subject to the field weakening control; and reduce an amplitude of the stator flux linkage and perform the field weakening control if the motor is necessary to subject to the field weakening control.

9. A storage medium, on which a computer program is stored, **characterized in that** the computer program is executable by one or more processors so as to implement the direct torque field weakening control method according to any one of claims 1 to 7.

10. An electronic device, comprising a memory on which a computer program is stored, and a processor, **characterized in that** the memory and the processor are communicatively connected with each other, and the computer program, when executed by the processor, implements the direct torque field weakening control method according to any one of claims 1 to 7.

Determine a running state of a currently used motor, the running state including forward rotation and reverse rotation — S101

Determine whether the motor needs field weakening control if the running state of the motor is the forward rotation — S102

Reduce a stator flux linkage amplitude and perform the field weakening control if the motor requires the field weakening control — S103

Determine whether the motor needs field weakening control if the running state of the motor is the reverse rotation — S104

Reduce a stator flux linkage amplitude and perform the field weakening control if the motor requires the field weakening control — S105

**Fig. 1**

Torque error → PI regulation and amplitude limit

$\varphi_s$

$\varphi_{s\_fw}$

$\varphi_{s\_ref}$ +

$T_{ref}$

$T$

Compare a flux linkage and a torque

$\varphi_r$ $T_e$

Select a pulse

$U_{dc}$

DC / AC — Inverter

Motor model

$U_{dc}$
$i_{sa}$
$i_{sb}$

MOTOR

**Fig. 2**

**Fig. 3**

**Fig. 4**

Phase angle of state flux linkage

**Fig. 5a**

Phase angle of state flux linkage

**Fig. 5b**

First determination unit
601

Second determination
unit 602

Control unit 603

**Fig. 6**

700

701

702

Memory

Processor

703

Multi-media
component

704

I/O interface

705

Communication
component

**Fig. 7**

## INTERNATIONAL SEARCH REPORT

| | International application No. |
|---|---|
| | **PCT/CN2021/126092** |

**A. CLASSIFICATION OF SUBJECT MATTER**

H02P 23/00(2016.01)i; H02P 23/30(2016.01)i; H02P 23/24(2016.01)i; H02P 27/08(2006.01)i; H02P 21/00(2016.01)i; H02P 21/30(2016.01)i; H02P 25/02(2016.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNABS, VEN.CNTXT, USTXT, CNKI, web of science: 电机, 电动机, 马达, 正转, 反转, 弱磁, 弱磁控制, 弱磁调控, 转矩, 力矩, 扭矩, 定子磁链; motor, machine, weak flux, weak magnet, torque+, stator, flux+

**C. DOCUMENTS CONSIDERED TO BE RELEVANT**

| Category* | Citation of document, with indication, where appropriate, of the relevant passages | Relevant to claim No. |
|---|---|---|
| PX | CN 113452301 A (CRRC ZHUZHOU INSTITUTE CO., LTD.) 28 September 2021 (2021-09-28) claims 1-10 | 1-10 |
| Y | CN 107026592 A (ZHEJIANG SAVENGY ELECTRIC TECHNOLOGY CO., LTD.) 08 August 2017 (2017-08-08) description, paragraphs [0013]-[0022], and figures 1-2 | 1, 8-10 |
| Y | CN 111262486 A (CRRC ELECTRIC VEHICLE CO., LTD.) 09 June 2020 (2020-06-09) description, paragraphs [0067]-[0158], and figures 1-9 | 1, 8-10 |
| Y | CN 101143597 A (OMRON CORP.) 19 March 2008 (2008-03-19) description, page 4, line 20 to page 9, the last line, and figures 1-14 | 1, 8-10 |
| Y | CN 110995109 A (SOUTHEAST UNIVERSITY) 10 April 2020 (2020-04-10) description, page 3, paragraphs [0035]-[0074], and figures 1-4 | 1, 8-10 |
| A | KR 102086242 B1 (HYUNDAI ELEVATOR CO., LTD.) 06 March 2020 (2020-03-06) entire document | 1-10 |
| A | KR 20170070935 A (HYUNDAI MOTOR CO., LTD. et al.) 23 June 2017 (2017-06-23) entire document | 1-10 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 November 2021** | **24 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/126092** |

**C.    DOCUMENTS CONSIDERED TO BE RELEVANT**

| Category* | Citation of document, with indication, where appropriate, of the relevant passages | Relevant to claim No. |
|---|---|---|
| A | JP 2001169593 A (FUJI ELECTRIC CO., LTD.) 22 June 2001 (2001-06-22)<br>entire document | 1-10 |

Form PCT/ISA/210 (second sheet) (January 2015)

**INTERNATIONAL SEARCH REPORT**
Information on patent family members

International application No.

**PCT/CN2021/126092**

| Patent document cited in search report | | | Publication date (day/month/year) | Patent family member(s) | | | Publication date (day/month/year) |
|---|---|---|---|---|---|---|---|
| CN | 113452301 | A | 28 September 2021 | None | | | |
| CN | 107026592 | A | 08 August 2017 | None | | | |
| CN | 111262486 | A | 09 June 2020 | WO | 2020108173 | A1 | 04 June 2020 |
| CN | 101143597 | A | 19 March 2008 | CN | 101143597 | B | 08 December 2010 |
| | | | | EP | 1900605 | A2 | 19 March 2008 |
| | | | | JP | 2008068769 | A | 27 March 2008 |
| | | | | EP | 1900605 | A3 | 01 September 2010 |
| | | | | US | 2008066995 | A1 | 20 March 2008 |
| | | | | EP | 1900605 | B1 | 08 February 2012 |
| | | | | US | 7831356 | B2 | 09 November 2010 |
| | | | | JP | 4969188 | B2 | 04 July 2012 |
| | | | | IN | 200701101 | I2 | 18 April 2008 |
| CN | 110995109 | A | 10 April 2020 | CN | 110995109 | B | 10 August 2021 |
| KR | 102086242 | B1 | 06 March 2020 | None | | | |
| KR | 20170070935 | A | 23 June 2017 | KR | 101856301 | B1 | 10 May 2018 |
| JP | 2001169593 | A | 22 June 2001 | JP | 3711824 | B2 | 02 November 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110574687X